# EUROPÄISCHE PATENTSCHRIFT

(11) **EP 1 834 868 B1**
(45) Veröffentlichungstag und Bekanntmachung des Hinweises auf die Patenterteilung: **02.05.2012**
(21) Anmeldenummer: 07004982.0
(22) Anmeldetag: 10.03.2007
(51) Int. Cl.: B62K 23/04, B62M 25/04

(54) **Schaltermechanismus mit Kompressionsfeder**
Gear change mechanism with compression spring
Mécanisme de changement de vitesses doté d'un ressort de compression

(30) Priorität: 15.03.2006 DE 102006011855
(43) Veröffentlichungstag der Anmeldung: 19.09.2007
(73) Patentinhaber: SRAM Deutschland GmbH, 97404 Schweinfurt (DE)
(72) Erfinder: Weiss, Martin, Dipl.-Ing., 97424 Schweinfurt (DE)

(56) Entgegenhaltungen:
- DE-A1-102005 014 007
- US-A- 6 021 688
- US-A1- 2003 221 506
- US-A1- 2004 069 089

## Beschreibung

Die vorliegende Erfindung betrifft einen Schaltmechanismus mit einer vorgespannten Kompressionsfeder zur Betätigung eines Fahrradgetriebes gemäß dem Oberbegriff des Hauptanspruches.

Schalter werden zum Aufwickeln und Freigeben des federvorgespannten Schaltzuges verwendet und fixieren in den Schaltpausen die aktuelle Schaltstellung. Solche Schalter sind aus den Patentschriften DE 103 58 438 A1 und DE 1 00 43 612 A1 bekannt.

Die gezeigten Schalter beinhalten jeweils ein Schaltbetätigungselement und ein Aufwickelelement zum Aufziehen bzw. Freigeben des Schaltzuges sowie eine Halteeinrichtung zum Positionieren des federvorgespannten Schaltzuges. Das Schaltbetätigungselement verdreht das Aufwickelelement, während die Halteeinrichtung das Aufwickelelement in der nicht geöffneten Stellung stets in der momentanen Schaltposition festhält und somit der Rückstellkraft am Schaltzug entgegen wirkt.

Der Drehgriffschalter in der DE 103 58 438 A1 besteht aus einem Schaltergehäuse, einem Seileinzugelement sowie einem Betätigungselement in Form eines Drehgriffes. Die Schaltmechanik für das Aufziehen, Freigeben und Halten der Schaltstellung wird von einer Sperrklinke und einer Spannfeder gebildet. Die Sperrklinke ist im Schaltergehäuse gelagert und greift in eine Rast- und Auslösekontur am entsprechenden Ringelement ein. Die Spannfeder in Form einer Wurm- bzw. Spiralfeder wird im Betätigungselement geführt und unterstützt den Auslösevorgang.

In der DE 1 186 523 wird eine Schalteinrichtung gezeigt, die ebenfalls aus einem Schaltergehäuse, einer Seilspule und einem Drehgriff besteht. Der Schaltermechanismus setzt sich aus einer Klinke und einem Federelement zusammen. Die Klinke ist an der Seilspule angeordnet und greift in eine Rastverzahnung im Schaltergehäuse ein. Der Auslösevorgang wird durch das Federelement unterstützt, das auch an der Seilspule angelenkt ist. Die Klinke und das Federelement bestehen aus dem gleichen Werkstoff wie die Seilspule und sind fest mit der Spule verbunden bzw. bilden mit dieser ein gemeinsames Bauteil.

Beide Schalter haben die gleiche Funktionsweise. Beim Aufziehvorgang läuft der Drehgriff gegen einen Anschlag an der Seilspule und nimmt diese mit. Dabei ratscht die Sperrklinke über die entsprechende Rastkontur. Die Sperrklinke fixiert nach dem Schaltvorgang, durch den Eingriff in die Rastverzahnung, die aktuelle Schaltstellung. Der Freigabevorgang wird durch Drehen des Griffes in Freigaberichtung eingeleitet und von der Spannfeder unterstützt. Zuerst wird durch einen Vorweg das Spannen eines Federelementes ermöglicht und dann mit einem Ausheber bzw. Freigabeelement die Vorspannung der Sperrklinke in Richtung Rastkontur aufgehoben, wodurch der Rastzahn leicht überwunden werden kann. Die Sperrklinke legt sich nach einer definierten Bewegung des Griffes an den nächsten Rastzahn an, und wird dabei von der sich entspannenden Spannfeder angeschoben. Dieser Vorgang wird eventuell noch durch die Vorspannung des Schaltzuges unterstützt. Die am Rastzahn anliegende Sperrklinke gewährleistet die Arretierung der aktuellen Schaltstellung bis zum nächsten Schaltvorgang.

Die in den beiden Patentschriften aufgezeigten Schalter sind voll funktionsfähig, allerdings hinsichtlich Schaltverhalten und Abstimmbarkeit der Spannfeder und in Richtung Herstellaufwand verbesserungsfähig.

US 6 021 688 A offenbart einen Schaltermechanismus gemäß des Oberbegriffs des Anspruchs 1.

Aufgabe der Erfindung ist es, einen Schaltermechanismus zu schaffen, der zum einen die Sperrklinke und die Spannfeder zu einem Bauteil zusammenfasst und zum anderen die Abstimmbarkeit der Federeigenschaften und die Austauschbarkeit des Federelementes erleichtert.

In der gemäß den kennzeichnenden Merkmalen der Patentansprüche vorgeschlagenen Lösung wird die Schaltfunktion, insbesondere die Sperr- und Vorspannfunktion, mit einem günstig herstellbaren Bauteil bewerkstelligt.

Der Schaltermechanismus gemäß der vorliegenden Erfindung weist ebenso eine Sperrklinke zum Fixieren der einzelnen Gangstufen und eine Vorspannfeder auf. Mittels dieser Vorspannfeder wird noch vor dem Ausklinken der Sperrklinke eine Schaltkraft in Freigaberichtung aufgebaut. Diese Schaltkraft beeinflusst je nach Federvorspannung und Federkennlinie der Vorspannfeder das Schaltverhalten bzw. das Schaltempfinden nicht unwesentlich. Die erfinderische Kompressionsfeder verbessert die Funktion und den Herstellaufwand der bereits aufgezeigten Lösungen durch das Zusammenführen der Sperr- und Vorspannfunktion in ein Bauteil, das im Drehgriff integriert bzw. um die Seilspule angeordnet ist. Dieses Bauteil ist im Prinzip eine Formfeder mit einer flachen Querschnittsfläche. Es stellt eine Kombination aus Knickstab und Biegefeder dar und bildet auf der einen Seite die Sperrklinke und auf der anderen Seite die Spannfeder. Im eingebauten Zustand befindet sich die Kompressionsfeder in einem ringförmigen Freiraum zwischen Seilspule und Schaltergehäuse. Dabei rastet die Kompressionsfeder am einen Ende mit der Klinkennase in die Rastkontur am Schaltergehäuse ein und stützt sich mit dem anderen Ende an einem Anschlag des Griffteiles ab. Am Ende bzw. an der Stirnseite des Griffteiles befinden sich neben dem Anschlag noch weitere Mitnehmer sowie ein Ausheber, die axial in den Freiraum bzw. in entsprechende Taschen der Seilspule hineinragen. Die Kompressionsfeder verfügt über zwei Abschnitte, den Sperrklinkenabschnitt und den Spannfederabschnitt. Zwischen diesen Abschnitten ist die Kompressionsfeder abgewinkelt und wird an dieser Stelle über eine Erhebung am Umfang der Seilspule geführt. Der Sperrklinkenabschnitt ragt mit der Klinkennase in die Rastkontur am Schaltergehäuse und verhindert somit eine unbeabsichtigte Verdrehung der Seilspule in Freigaberichtung.

Wird das Griffteil in Aufziehrichtung bewegt, dann wird die Seilspule über mindestens einen Mitnehmer, der in eine entsprechende Tasche an der Seilspule eingreift, in die gleiche Richtung um die Griffachse gedreht. Dabei ratscht die Klinkennase über die Rastkontur und der Schaltzug wird auf die Seilspule aufgerollt. Wird das Griffteil weiter bewegt, so können mit einer Betätigung auch mehrere Gänge hintereinander geschaltet werden, wobei das Erreichen einer neuen Gangstufe durch das Einklinken der federvorgespannten Klinkennase akustisch erkannt wird.

Bei einer Schaltbewegung des Griffteiles in Freigaberichtung, wird zuerst der Spannfederabschnitt vorgespannt, wodurch sich der Spannfederabschnitt verformt. Damit das Ende des Spannfederabschnittes nicht unkontrolliert ausbricht, liegt es an einem entsprechenden Anschlag bzw. in einer Abstützvorrichtung des Griffteiles an. Mittels der Abstützvorrichtung kann die Schalt- bzw. Vorspannkraft gezielt in den Spannfederabschnitt eingeleitet werden, der sich dann ähnlich wie ein Knickstab verhält. Die mögliche Verformung des Spannfederabschnittes wird durch geeignete, in Richtung Kompressionsfeder gerichtete Anlagepunkte bzw. Anlageflächen am Umfang der Seilspule bzw. am Innendurchmesser des Schaltergehäuses gezielt beeinflusst, wodurch ein günstiger Schaltkraftverlauf erreicht wird. Eine weiche Federkennlinie wird durch einen entsprechend langen Spannfederabschnitt erzielt, dessen Verlauf dann der Krümmung des Freiraumes zwischen Schaltergehäuse und Seilspule folgt oder in Richtung Seilspule abgewinkelt ist. Während die Klinkennase durch die Bewegung des Aushebers aus dem Bereich der Rastkontur heraus geschoben wird, erfolgt keine Abwickelbewegung der Seilspule, aber eine Bewegung des Griffteiles, wodurch der Spannfederabschnitt gespannt wird. Erst wenn die erforderliche Vorspannung erreicht wird, wird die Klinkennase vom Ausheber wegabhängig aus der Rastkontur bzw. über den Rastzahn transportiert. Gelangt die Klinkennase über den Rastzahn, so wird die Sperre der Seilspule aufgehoben und der gespannte Spannfederabschnitt und die in Freigaberichtung wirkende Seilzugvorspannung beschleunigen die Seilspule. Dabei wird die Seilspule solange weitergedreht, bis die Klinkennase in die nächste Vertiefung der Rastkontur eintaucht und diesen Schaltvorgang bzw. das Abrollen des Schaltzuges von der Seilspule beendet. Wird das Betätigungselement weiter in Freigaberichtung bewegt, so wiederholt sich dieser Vorgang. So können mit einer Betätigung auch mehrere Gänge hintereinander geschaltet werden. Das Einklinken der federvorgespannten Klinkennase in die Vertiefung der Rastkontur signalisiert das Erreichen einer neuen Gangstufe.

Neben einem unkomplizierten und komprimierten Schalteraufbau ermöglicht die einfach herstellbare Kompressionsfeder durch unterschiedliche Gestaltung des Sperrklinken- und Spannfederabschnittes sowie durch die konstruktive Ausführung möglicher Abstützpunkte am Innendurchmesser des Schaltergehäuses oder am Umfang der Seilspule, insbesondere im Bereich des Spannfederabschnittes, einen gangindividuellen Freigabeweg bzw. Freigabekraftverlauf.

Die Anordnung der Kompressionsfeder zwischen Seilspule und Schaltergehäuse ermöglicht eine sehr kompakte Schalterbauweise und eignet sich sowohl für Hebelals auch für Drehgriffschalter.

### Kurzbeschreibung der Zeichnung

Anhand mehrerer Figuren wird ein Ausführungsbeispiel eines mit einer Kompressionsfeder ausgerüsteten Drehgriffschalters zur weiteren Erläuterung der Erfindungsmerkmale gezeigt:
- Fig. 1: zeigt die wesentlichen Komponenten des Drehgriffschalters
- Fig. 2: zeigt einen Schnitt durch den Drehgriffschalter mit einer entspannten Kompressionsfeder
- Fig. 3: zeigt einen Schnitt durch den Drehgriffschalter mit einer gespannten Kompressionsfeder und die Verformung des Spannfederabschnittes

### Beschreibung eines bevorzugten Ausführungsbeispieles

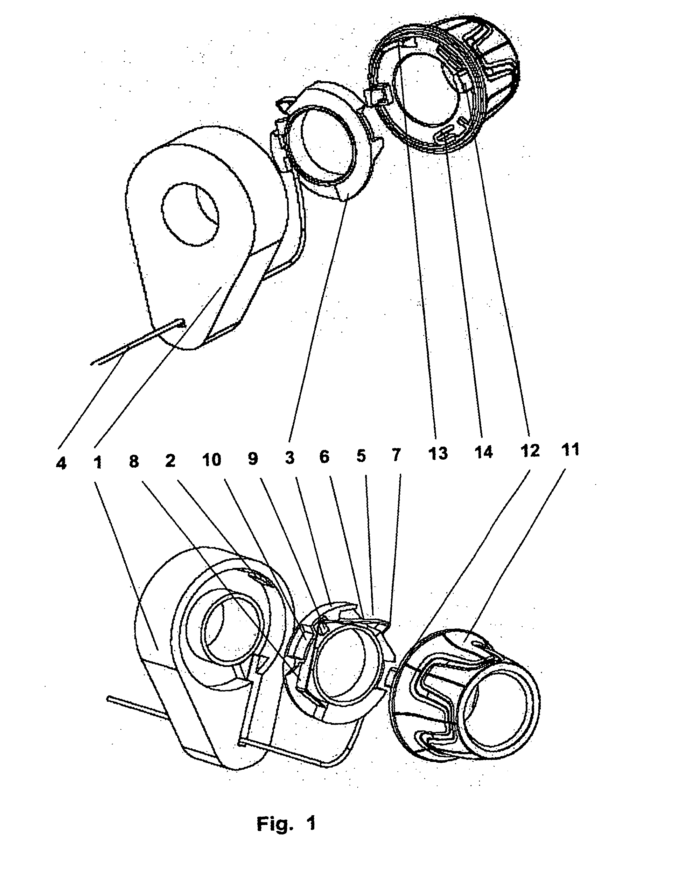

In **Figur 1** werden die wesentlichen Komponenten des Drehgriffschalters gezeigt. Das Schaltergehäuse 1 fungiert als tragendes Bauteil und verfügt über eine nach innen gerichtete Rastkontur 2 und nimmt die Seilspule 3 mit dem eingehängten Schaltzug 4 auf. Zur Aufnahme der Kompressionsfeder 5 ist zwischen der, den Lenker umhüllenden Spuleninnenwand und dem Spulenumfang ein Einbauraum vorgesehen. Die Kompressionsfeder 5 hat einen Sperrklinkenabschnitt 6 mit einer Klinkennase 7 am Ende sowie einen Spannfederabschnitt 8. Die Kompressionsfeder 5 ist zwischen dem Sperrklinkenabschnitt 6 und dem Spannfederabschnitt 8 abgewinkelt. Hier wird auch die Kompressionsfeder 5 in einer Aufnahme, die von innen durch eine Erhebung 9 am Umfang der Spuleninnenwand und von einer entsprechenden Ausnehmung innerhalb des Spulenumfanges formschlüssig aufgenommen. Um die erforderliche Baulänge des Spannfederabschnittes 8 im gekrümmten Einbauraum unterzubringen, ist der Spannfederabschnitt 8 in Richtung Spuleninnenwand gekrümmt bzw. abgebogen. Am Umfang der Seilspule 3 sind zwei Taschen 10 angeordnet, sie nehmen die entsprechend am Griffteil 11 angeformten Mitnehmer 12 auf. An der Stirnseite des Griffteiles 11 befindet sich noch der Ausheber 13 sowie die Abstützvorrichtung 14, die im montierten Zustand ebenso wie die Mitnehmer 12 in die Seilspule hineinragen. Die Länge des Spannfederabschnittes 8 ist so dimensioniert, dass das Ende spielfrei in der Abstützvorrichtung 14 aufgenommen wird. Damit fertigungsbedingte Toleranzen ausgeglichen werden, wird die Kompressionsfeder 5 zwischen der Erhebung 9 und der Abstützvorrichtung 14 mit einer geringen Vorspannung eingebaut.

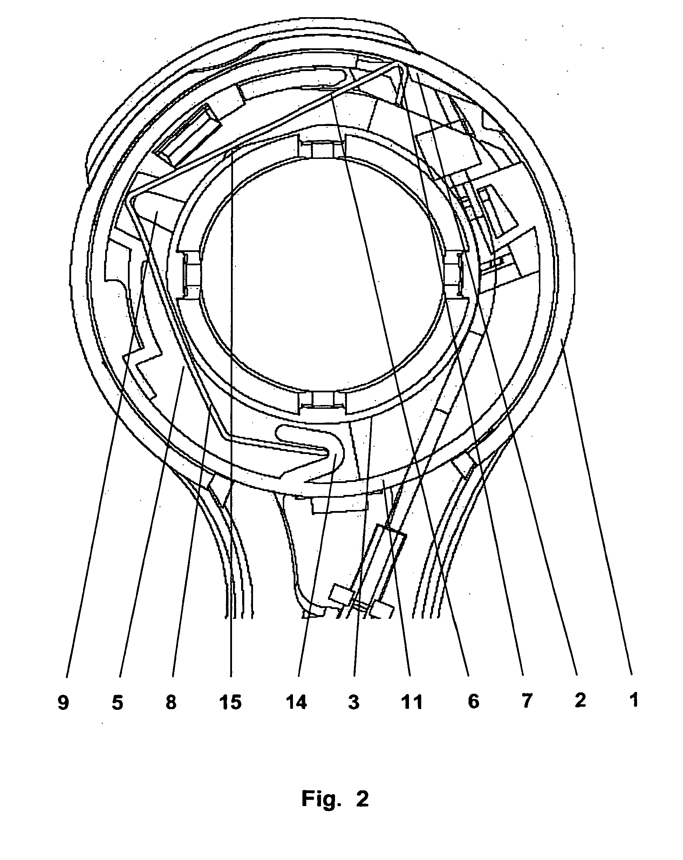

**Figur 2** zeigt einen Schnitt durch den Drehgriffschalter mit einer entspannten Kompressionsfeder 5. Die Kompressionsfeder 5 ist abgewinkelt und verfügt über einen Sperrklinkenabschnitt 6 sowie über einen Spannfederabschnitt 8. Die Kompressionsfeder 5 befindet sich im Einbauraum der Seilspule 3 und wird von der Erhebung 9 sowie von zwei Anlagepunkten innerhalb des Spulenumfanges formschlüssig aufgenommen. Der Sperrklinkenabschnitt 6 stützt sich an einer Auflage 15 an der Spuleninnenwand definiert ab, wodurch die Biegesteifigkeit des freien Sperrklinkenabschnittes 6 noch erhöht wird. Die Klinkennase 7 am Ende des Sperrklinkenabschnittes 6 befindet sich in der Rastkontur 2 des Schaltergehäuses 1 und fixiert die aktuelle Schaltposition im 1. Gang. Der Ausheber 13 befindet sich in der Ruhestellung und berührt den Sperrklinkenabschnitt 6 nicht. Das Ende des Spannfederabschnittes 8 wird von einer Abstützvorrichtung 14 am Griffteil 11 spielfrei aufgenommen. Dadurch wird sichergestellt, dass die Krafteinleitung beim Freigabevorgang, vom Griffteil 11 auf die Kompressionsfeder 5 immer an derselben Stelle bzw. mit konstantem Radius erfolgt. Damit der Spannfederabschnitt 8 besser im gekrümmten Einbauraum der Seilspule 3 untergebracht werden kann, ist ein Teilbereich des Spannfederabschnittes 8 in Richtung Spuleninnenwand gebogen, zudem ist der Umfang der Spuleninnenwand abgeflacht, den der Spannfederabschnitt 8 tangieren könnte.

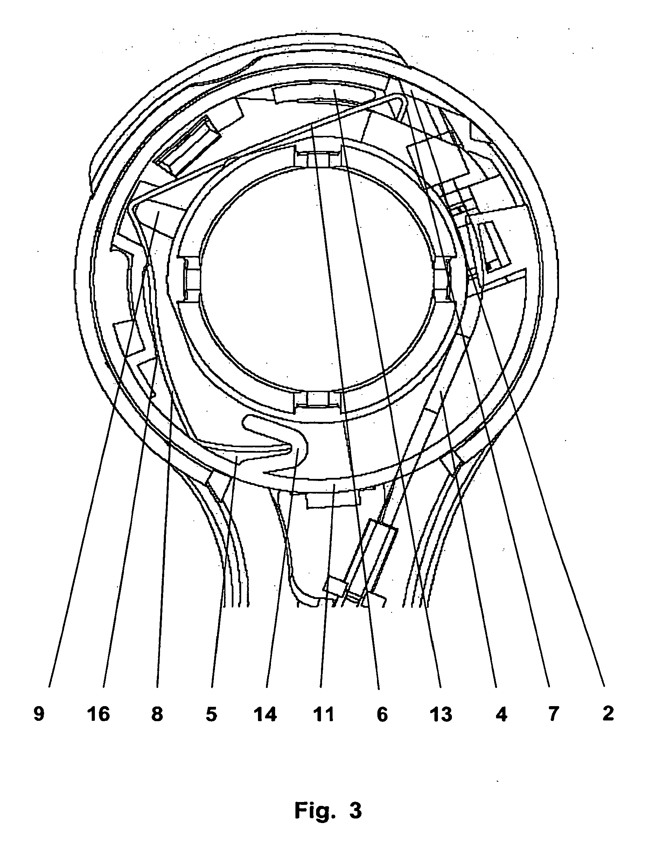

**Figur 3** zeigt einen Schnitt durch den Drehgriffschalter mit einer gespannten Kompressionsfeder 5, insbesondere die Verformung des Spannfederabschnittes 8. Das Griffteil 11 wurde in Freigaberichtung bewegt und hat den Spannfederabschnitt 8 über die Abstützvorrichtung 14 vorgespannt. Dabei hat sich der Spannfederabschnitt 8, da er aufgrund der formschlüssigen Einspannung an der Erhebung 9 nicht in Drehrichtung ausweichen kann, radial nach außen verformt und sich an einen definierten Anlegepunkt 16 am Rand des Einbauraumes der Seilspule 3 oder auch am Rand des Griffteiles 11 angelehnt. Mit der Lage von Anlegepunkten 16 wird die Federkennlinie des Spannfederabschnittes 8 bzw. der Schaltkraftverlauf der Freigabebewegung beeinflusst. Erst wenn sich der Spannfederabschnitt der Kompressionsfeder 5 verformt hat, wird die Klinkennase 7 am Ende des Sperrklinkenabschnittes 6 vom Ausheber 13 über die Rastkontur 2 befördert. Die anschließende Drehbewegung der Seilspule 3 wird durch den Entspannvorgang des Spannfederabschnittes 8 und mit zusätzlicher Unterstützung des vorgespannten Schaltzuges 4 ausgeführt und erfolgt unabhängig von der weiteren Bewegung des Griffteiles 11.

### Bezugszeichenliste

- 1: Schaltergehäuse
- 2: Rastkontur
- 3: Seilspule
- 4: Schaltzug
- 5: Kompressionsfeder
- 6: Sperrklinkenabschnitt
- 7: Klinkennase
- 8: Spannfederabschnitt
- 9: Erhebung
- 10: Tasche
- 11: Griffteil
- 12: Mitnehmer
- 13: Ausheber
- 14: Abstützvorrichtung
- 15: Auflage
- 16: Anlegepunkt

## Patentansprüche

1. Schaltermechanismus zur Betätigung mindestens einer Mehrgangschaltung an einem Fahrrad bestehend aus:
- einem Schaltergehäuse **1** mit einer Rastkontur **2**
- einer Seilspule **3** mit einem Schaltzug **4**
- einem Griffteil **11** mit einem Ausheber **13** und mindestens einem Mitnehmer **12**, wobei
zwischen dem Griffteil **11** und der Seilspule **3** eine Kompressionsfeder 5 mit einem Sperrklinkenabschnitt **6** und einem Spannfederabschnitt **8** angeordnet ist,
wobei der Sperrklinkenabschnitt **6** über eine Klinkennase **7** verfügt, die in die Rastkontur **2** eintaucht **dadurch gekennzeichnet, dass** der Spannfederabschnitt **8** an einer Abstützvorrichtung **14** am Griffteil **11** anliegt.

2. Schaltermechanismus nach Anspruch 1,
**dadurch gekennzeichnet,**
**dass** die Kompressionsfeder **5** zwischen dem Sperrklinkenabschnitt **6** und dem Spannfederabschnitt **8** angewinkelt ist und sich die Kompressionsfeder **5** an dieser Stelle an einer entsprechenden Erhebung **9** am Umfang der Seilspule **3** abstützt,
wobei die Anordnung der Abbiegung an der Außenseite eine Raum sparende Anordnung der Kompressionsfeder **5** ermöglicht.

3. Schaltermechanismus nach Anspruch 2,
**dadurch gekennzeichnet,**
**dass** die Kompressionsfeder **5** einen flachen Querschnitt aufweist und der Spannfederabschnitt **8** sowie der Sperrklinkenabschnitt **6** einen für die Herstellung günstigen geraden Verlauf nehmen und dass sich der Spannfederabschnitt **8** beim Freigabevorgang reversibel verformt.

4. Schaltermechanismus nach Anspruch 3,
**dadurch gekennzeichnet,**
**dass** der Spannfederabschnitt **8** über eine entsprechende Länge verfügt, so dass im montierten Zustand kein Spiel zwischen Griffteil **11** und Seilspule **3** vorhanden ist,
oder beide Bauteile durch eine leichte Durchbiegung im Endbereich des Spannfederabschnittes **8** sogar leicht gegeneinander vorgespannt sind.

5. Schaltermechanismus nach Anspruch 1,
**dadurch gekennzeichnet,**
**dass** die Abstützvorrichtung **14** das Ende des Spannfederabschnittes **8** umschließt,
damit dieses nicht radial ausweichen kann, wenn vom Griffteil **11** Schaltkräfte in Richtung des Verlaufes des Spannfederabschnittes **8** in die Kompressionsfeder **5** eingeleitet werden.

6. Schaltermechanismus nach Anspruch 1,
**dadurch gekennzeichnet,**
**dass** der Spannfederabschnitt **8** in Richtung Seilspule **3** gebogen ist oder ein Teilbereich des Spannfederabschnittes **8** in Richtung Seilspule **3** abgewinkelt ist.

7. Schaltermechanismus nach Anspruch 2,
**dadurch gekennzeichnet,**
**dass** zur Abstützung des Sperrklinkenabschnittes **6** neben der Erhebung **9** noch mindestens eine weitere erhabene Auflage **15** am Umfang der Seilspule **3** angeordnet ist.

8. Schaltermechanismus nach Anspruch 1,
**dadurch gekennzeichnet,**
**dass** an der Stirnseite des Griffteiles **11** neben der Abstützvorrichtung **14** noch weitere, sich in axialer Richtung erstreckende Ansätze, wie z. B. ein Ausheber **13** sowie mindestens ein Mitnehmer **12** angeordnet sind, wobei der Mitnehmer **12** in eine entsprechend ausgebildete Tasche **10** an der Seilspule **3** eintaucht.

9. Schaltermechanismus nach Anspruch 3,
**dadurch gekennzeichnet,**
**dass** die Kompressionsfeder **5** aus metallischem Werkstoff, vorzugsweise aus Federstahl besteht.

## Claims

1. Shifter mechanism for actuating at least one multispeed gearshift on a bicycle, consisting of:
- a shifter housing 1 having a latching contour 2
- a cable coil 3 having a gearshift cable 4
- a grip part 11 having a lift-out mechanism 13 and at least one driver 12, wherein a compression spring 5 having a pawl section 6 and a tension spring section 8 is arranged between the grip part 11 and the cable coil 3, wherein the pawl section 6 has a pawl lug 7 which engages in the latching contour 2, **characterized in that** the tension spring section 8 butts against a supporting device 14 on the grip part 11.

2. Shifter mechanism according to Claim 1,
**characterized**
**in that** the compression spring 5 is angled between the pawl section 6 and the tension spring section 8 and the compression spring 5 is supported at this point against a corresponding elevation 9 on the circumference of the cable coil 3, wherein the arrangement of the curve on the outside allows a space-saving arrangement of the compression spring 5.

3. Shifter mechanism according to Claim 2,
**characterized**
**in that** the compression spring 5 has a flat cross section and the tension spring section 8 and the pawl section 6 follow a straight course which is favourable to production, and in that the tension spring section 8 deforms in a reversible manner during the releasing operation.

4. Shifter mechanism according to Claim 3,
**characterized**
**in that** the tension spring section 8 has an appropriate length so that in the fitted state there is no play between the grip part 11 and the cable coil 3, or the two components are even prestressed slightly in relation to one another by a slight deflection in the end region of the tension spring section 8.

5. Shifter mechanism according to Claim 1,
**characterized**
**in that** the supporting device 14 encloses the end of the tension spring section 8, in order that the latter cannot yield radially when shifting forces in the direction of the course of the tension spring section 8 are introduced into the compression spring 5 by the grip part 11.

6. Shifter mechanism according to Claim 1,
**characterized**
**in that** the tension spring section 8 is bent in the direction of the cable coil 3 or a sub-region of the tension spring section 8 is angled in the direction of the cable coil 3.

7. Shifter mechanism according to Claim 2,
**characterized**
**in that** in order for the pawl section 6 to be supported next to the elevation 9, at least one further raised support 15 is arranged on the circumference of the cable coil 3.

8. Shifter mechanism according to Claim 1,
**characterized**
**in that** further attachments, e.g. a lift-out mechanism 13 and at least one driver 12, which extend in the axial direction, are arranged on the end side of the grip part 11 next to the supporting device 14, wherein the driver 12 engages in an appropriately formed recess 10 in the cable coil 3.

9. Shifter mechanism according to Claim 3,
**characterized**
**in that** the compression spring 5 consists of metallic material, preferably of spring steel.

## Revendications

1. Mécanisme de changement de vitesses pour actionner au moins un changement de vitesses multiple sur une bicyclette, constitué des éléments suivants :
- un boîtier de dispositif de changement de vitesses 1 doté d'un contour d'encliquetage 2,
- une bobine de câble 3 dotée d'un câble de changement de vitesses 4,
- une partie de poignée 11 dotée d'un dispositif de levage 13 et d'au moins un dispositif d'entraînement 12,
un ressort de compression 5 doté d'une section de cliquet de verrouillage 6 et d'une section de ressort de serrage 8 étant disposé entre la partie de poignée 11 et la bobine de câble 3, la section de cliquet de verrouillage 6 possédant un ergot de cliquet 7 qui pénètre dans le contour d'encliquetage 2, **caractérisé en ce que** la section de ressort de serrage 8 s'applique contre un dispositif de support 14 sur la partie de poignée 11.

2. Mécanisme de changement de vitesses selon la revendication 1,
**caractérisé**
**en ce que** le ressort de compression 5 est plié entre la section de cliquet de verrouillage 6 et la section de ressort de serrage 8, et le ressort de compression 5 s'appuie en cet emplacement contre un rehaussement 9 correspondant sur la périphérie de la bobine de câble 3, l'agencement de la courbure sur le côté extérieur permettant un agencement compact du ressort de compression 5.

3. Mécanisme de changement de vitesses selon la revendication 2,
**caractérisé**
**en ce que** le ressort de compression 5 présente une section transversale plane et la section de ressort de serrage 8 ainsi que la section de cliquet de verrouillage 6 ont une allure rectiligne avantageuse pour la fabrication, et en ce que la section de ressort de serrage 8 est déformée de manière réversible lors de l'opération de libération.

4. Mécanisme de changement de vitesses selon la revendication 3,
**caractérisé**
**en ce que** la la section de ressort de serrage 8 possède une longueur correspondante, de sorte qu'aucun jeu n'existe entre la partie de poignée 11 et la bobine de câble 3 dans l'état monté, ou les deux parties structurales sont même légèrement précontraintes l'une contre l'autre par une légère flexion dans la région d'extrémité de la section de ressort de serrage 8.

5. Mécanisme de changement de vitesses selon la revendication 1,
**caractérisé**
**en ce que** le dispositif de support 14 entoure l'extrémité de la section de ressort de serrage 8, de sorte que cette dernière ne puisse pas s'écarter radialement lorsque des forces de changement de vitesses sont appliquées par la partie de poignée 11 au ressort de compression 5 dans la direction de l'étendue de la section de ressort de serrage 8.

6. Mécanisme de changement de vitesses selon la revendication 1,
**caractérisé**
**en ce que** la section de ressort de serrage 8 est courbée dans la direction de la bobine de câble 3, ou une région partielle de la section de ressort de serrage 8 est coudée dans la direction de la bobine de câble 3.

7. Mécanisme de changement de vitesses selon la revendication 2,
**caractérisé**
**en ce que** pour le support de la section de cliquet de verrouillage 6, en plus du rehaussement 9, au moins un appui en relief supplémentaire 15 est disposé sur la périphérie de la bobine de câble 3.

8. Mécanisme de changement de vitesses selon la revendication 1,
**caractérisé**
**en ce qu'**en plus du dispositif de support 14, des saillies supplémentaires qui s'étendent dans la direction axiale, par exemple un dispositif de levage 13 ainsi qu'au moins un dispositif d'entraînement 12, sont disposés sur le côté frontal de la partie de poignée 11, le dispositif d'entraînement 12 pénétrant dans un évidement 10 réalisé de manière correspondante sur la bobine de câble 3.

9. Mécanisme de changement de vitesses selon la revendication 3,
**caractérisé**
**en ce que** le ressort de compression 5 est constitué d'un matériau métallique, de préférence d'acier à ressort.
